(19) Europäisches Patentamt / European Patent Office / Office européen des brevets

(11) **EP 2 038 230 B1**

(12) **EUROPEAN PATENT SPECIFICATION**

(45) Date of publication and mention
of the grant of the patent:
**10.01.2018 Bulletin 2018/02**

(21) Application number: **07777346.3**

(22) Date of filing: **31.05.2007**

(51) Int Cl.:
***C03C 3/06*** *(2006.01)*    ***C03B 19/14*** *(2006.01)*
***C03C 4/00*** *(2006.01)*

(86) International application number:
**PCT/US2007/012899**

(87) International publication number:
**WO 2007/143069 (13.12.2007 Gazette 2007/50)**

(54) **METHOD FOR MAKING REDUCED STRIAE LOW EXPANSION GLASS**

VERFAHREN ZUR HERSTELLUNG VON AUSDEHNUNGSARMEN GLAS MIT VERRINGERTEN SCHLIEREN

PROCÉDÉ DE FABRICATION D'UN VERRE DE FAIBLE DILATATION À STRIES RÉDUITES

(84) Designated Contracting States:
**DE FR GB IT NL**

(30) Priority: **31.05.2006 US 445048**

(43) Date of publication of application:
**25.03.2009 Bulletin 2009/13**

(73) Proprietor: **Corning Incorporated
Corning, NY 14831 (US)**

(72) Inventors:
• **MAXON, John E.
Canton, NY 13617 (US)**

• **ROSCH, William R.
Corning, NY 14830 (US)**

(74) Representative: **Scheuermann, Erik et al
Elkington and Fife LLP
Prospect House
8 Pembroke Road
Sevenoaks, Kent TN13 1XR (GB)**

(56) References cited:
**EP-A- 1 795 506       WO-A-2005/114328
WO-A-2006/004169    US-A- 5 696 038
US-A1- 2004 027 555    US-A1- 2005 032 622
US-A1- 2005 215 413**

**Description**

Field of the Invention

This invention relates to extreme ultraviolet elements made from glasses including silica and titania. In particular, the invention relates to a method for making such glass and elements which are suitable for extreme ultraviolet lithography.

Background of the invention

Ultra low expansion glasses and soft x-ray or extreme ultraviolet (EUV) lithographic elements made from silica and titania traditionally have been made by flame hydrolysis of organometallic precursors of silica and titania. Ultra-low expansion silica-titania articles of glass made by the flame hydrolysis method are used in the manufacture of elements used in mirrors for telescopes used in space exploration and extreme ultraviolet or soft x-ray-based lithography. These lithography elements are used with extreme ultraviolet or soft x-ray radiation to illuminate, project and reduce pattern images that are utilized to form integrated circuit patterns. The use of extreme ultraviolet or soft x-ray radiation is beneficial in that smaller integrated circuit features can be achieved, however, the manipulation and direction of radiation in this wavelength range is difficult. Accordingly, wavelengths in the extreme ultraviolet or soft x-ray range, such as in the 1 nm to 70 nm range, have not been widely used in commercial applications. One of the limitations in this area has been the inability to economically manufacture mirror elements that can withstand exposure to such radiation while maintaining a stable and high quality circuit pattern image. Thus, there is a need for stable high quality glass lithographic elements for use with extreme soft x-ray radiation.

US 2005/032622 discloses titania-doped silica glass articles having low thermal expansions and low variations in thermal expansion. The glass articles may have a titania content of between 5 wt% and 9 wt%.

WO 2005/114328 discloses a quartz glass blank for an optical component for transmitting radiation with a wavelength of 15 nm and shorter. The blank consists of a highly pure quartz glass, doped with titanium and/or fluorine.

One limitation of ultra low expansion titania-silica glass made in accordance with the method described above is that the glass contains striae. Striae are compositional inhomogeneities which adversely affect optical transmission in lens and window elements made from the glass. Striae can be measured by a microprobe that measures compositional variations that correlate to coefficient of thermal expansion (CTE) variations of a few ppb/°C. In some cases, striae have been found to impact surface finish at an angstrom root mean rms level in reflective optic elements made from the glass. Extreme ultraviolet lithographic elements require finishes having a very low rms level.

It would be advantageous to provide improved methods and apparatus for manufacturing ultra low expansion glasses containing silica and titania. In particular, it would be desirable to provide extreme ultraviolet elements having reduced striae and methods and apparatus that are capable of producing such glass elements. In addition, it would be desirable to provide improved methods and apparatus for measuring striae in ultra low expansion glass and extreme ultraviolet lithographic elements.

Summary of the Invention

The invention is directed to reducing striae in low expansion glass by controlling the boule motion during laydown of the material comprising the boule which is a silica-titania glass in the present invention. According to the present invention, boule motions consisting of short oscillation periods yield closer striae spacing than motions with long oscillations periods. When subjected to post-laydown heat treating, striae in boules made with shorter oscillation periods "self-anneal", thereby reducing the striae in the boule. Post lay-down heat treatments can further reduce the number of striae and produce a boule with minimal striae.

The disclosure is also directed to an ultra-low expansion glass and optical elements made therefrom that are suitable for extreme ultraviolet lithography, and to a method for making such glass and elements by reducing striae in ultra-low expansion glass by making a boule using short oscillation periods as described herein with heat-treating the glass at temperatures above 1600 °C for a time in the range of 48 hours to 288 hours. In a further embodiment the glass is heat treated without forcing the glass to flow or "move".

The invention is directed to a method for reducing striae in an ultra-low expansion silica-titania glass, and to optical elements made therefrom, in which a silica-titania consolidated glass boule is prepared in a rotating vessel in a furnace using short oscillation periods as described herein; heat treating the boule at a temperature in the range of 1600-1700 °C for a time in the range of 48-160 hours, preferably 48-96 hours, and cooling the consolidated boule from the 1600-1700 °C range to 1000 °C at a rate in the range of 25-75 °C per hour, for example at approximately 50 °C per hour, followed by cooling to ambient temperature at the natural cooling rate of the furnace to thereby yield a silica-titania glass boule having reduced striae. In an embodiment of this invention the glass boule is prepared by flame hydrolysis using silica and titania precursors selected from the group consisting of siloxanes and alkoxides and tetrachlorides of silicon and titanium. The preferred precursors are titanium isopropoxide and octamethylcyclotetrasiloxane

In another embodiment the invention is directed to heat-treating a low expansion glass at a temperature in the range of 1600-1700 °C for a time in the range of 48-160 hours without forcing the glass to flow or "move".

In a further embodiment the invention is directed to a method of reducing striae in a large boule of glass or in a segment of glass obtained from a large boule by heat treating the glass at a temperature in the range of 1600-1700 °C for a time in the range of 48-160 hours without forcing the glass to flow or "move"; and during the heat treatment the glass is rotated about an vertical axis, and the heat source is uniformly distributed across the horizontal dimensions of the glass.

In yet another embodiment the invention is directed to reducing striae in a silica-titania glass containing 5-10 wt. % titania by reducing the time for oscillation patterns to repeat themselves to a time of 10 minutes or less. In another embodiment the time for oscillation pattern repetition is reduced to 5 minutes or less. In an additional embodiment the time for oscillation pattern repetition is reduced to 2.5 minutes or less

Brief Description of the Drawings

Figure 1 is an illustration of a prior art apparatus that can be used for manufacturing silica-titania ultra low expansion glasses.

Figure 2A illustrate inteferometric data depicting the impact of striae on mid-frequency surface roughness.

Figure 2B illustrates inteferometric data across striae , showing peal-to valley changes in the surface

Figures 3A and 3B depict the birefringence magnitude due to striae on the y-axis versus the position on the boule (x-axis) before and after, respectively, heat treatment according to the invention, respectively.

Figure 4 illustrates the magnitude of striae reduction near the top of a boule before and after heat treatment according to the invention.

Figure 5 is an illustration of CTE changes versus location in a boule before and after the boule has been heat treated according to the invention.

Figure 6 is a graph illustrating a wide range of times and temperatures at which the invention can be practiced.

Figure 7A - 7C illustrates striae at different points through the thickness of the boule.

Figure 8 illustrates a "standard" or prior art low expansion glass boule.

Figure 9 illustrates a boule of low expansion glass (ULE glass).

Figure 10A illustrates peak-to-valley roughness of a finished optical element using the silica-titania glass manufactured according to the present invention.

Figure 10B illustrates peak-to-valley roughness of comparative finished optical elements using earlier silica-titania glass.

Detailed Description of the Invention

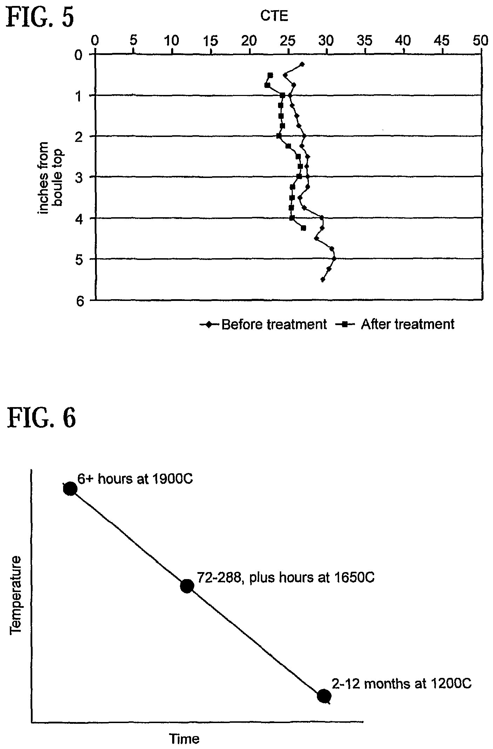

In one embodiment, the invention is directed to a method of reducing striae in low expansion glass by reducing the time it takes for the oscillation patterns to repeat to a time of ten (10) minutes or less. In another embodiment, the invention is directed to a method of reducing striae in low expansion glass by reducing the time it takes for the oscillation patterns to repeat to a time of two and one-half (2.5) minutes or less. In a further embodiments, the invention is directed to methods for reducing striae in low expansion glass by reducing the time it takes for the oscillation patterns to repeat to a time of 10 minutes or less, and heat treating the glass at temperatures from approximately 100 °C above the annealing point of the glass (approximately 1200 °C) to temperatures used for rapid flowout (approximately 1900 °C) for a time in the range of 6+ hours to 12 months depending on the temperature. Figure 6 is a generic graph illustrating the extreme and most useful (median) times and temperatures that can be used in practicing the invention. For most glass composition the practical (commercially desirable) times and temperatures are 72-288 hours at a temperature in the range of 1600-1700 °C (the median temperature being 1650 °C). At lower temperatures the required time will be extensive, but the results are expected to be similar to that obtained at the practical times/temperatures. However, if striae are reduced during preparation of the glass, for example, by decreasing the time for oscillation patterns to repeat themselves, the time can be reduced - for example, to a time in the range of 48-160 hours.

U.S. Patent No. 5,970,751 describes a method and apparatus for preparing fused silica-titania glass. The apparatus includes a stationary cup or vessel. U.S. Patent No. 5,696,038 describes using oscillation/rotation patterns for improving off-axis homogeneity in fused silica boules using a prior art rotating cup as described therein. As disclosed in U.S. Patent No. 5,696,038, the x-axis and y-axis oscillation patterns were defined by the equations:

$$x(t) = r_1 \sin 2\pi\omega_1 t + r_2 \sin 2\pi\omega_2 t$$

$$y(t) = r_1 \cos 2\pi\omega_1 t + r_2 \cos 2\pi\omega_2 t$$

where $x(t)$ and $y(t)$ represent the coordinates of the center of the boule as measured from the center of the furnace ringwall as a function of time $(t)$ measured in minutes. The sum of $r_1$ and $r_2$ ($r_1$ and $r_2$ are the radii of the offsets; that is the rotation acts like a rotating table on top of 2 other rotating tables offset by the r's) must be less than the difference between the radius of the ringwall and radius of the containment vessel or cup to avoid contact between these structures during formation of the boule. The parameters $r_1$, $r_2$, $\omega_1$, $\omega_2$, and a fifth parameter, $\omega_3$, which represents the boule's rotation rate about its center in revolutions per minute (rpm) define the total motion of the boule. Typical prior art values for $\omega_1$, $\omega_2$ and $\omega_3$ used in the manufacture oftitania-containing silica boules are 1.71018 rpm, 3.63418 rpm and 4.162 rpm, respectively, and these parameters were used herein.

U.S. Patent Application Publication No. 2004/0027555 describes a method for producing low expansion, titania-containing silica glass bodies by depositing titania-containing glass soot. The method in U.S. 2004/0027555 uses the apparatus described in U.S. 5,970,591 and the rotating/oscillating cup described in U.S. 5,696,038. Silica-titania soot is deposited in a vessel mounted on an oscillating table and the striae level is reduced by altering the oscillation pattern of the table, particularly by increasing the rotation rate of the table. In particular, U.S. 2004/0027555 states that it was found that increasing the values for each of $\omega_1$, $\omega_2$, and $\omega_3$ reduces striae values. Publication 2004/0027555 describes other factors that impact striae and steps that can be taken to counteract their formation. For example, it describes the determination that the flows through the exhaust ports or vents of the furnace impact striae and that striae could be lessened by increasing the number of vents or exhaust ports.

While the foregoing improvements decreased striae, further reduction of striae is highly desired. Further reducing striae in a boule of silica-titania ULE glass, or in a segment of glass obtained from a boule, will reduce some of the polishing issues which have been observed with ULE materials. Specifically, mid-spatial frequency surface roughness will be improved and this will result in a material more suitable for EUV applications and other applications where an extremely smooth surface finish is required. Striae (or composition layering) in ULE glass is very evident in the direction parallel with the top and bottom of the boules. The striae consists of variations in titania ($TiO_2$) composition of generally more than $\pm 0.1\%$ compared to the local average $TiO_2$ level; which levels are frequently in the 7.25 to 8.25 wt.% range (though they can be higher or lower, and are typically in the range of 5-10 wt% $TiO_2$) depending on nominal CTE target. Variations in composition (striae) result in alternating thin layers of different CTE and therefore alternating planes of compression and tension (between the layers). When attempting to polish such ULE glass material, the alternating compression and tension layers caused by striae result in unequal material removal and unacceptable surface roughness. This effect has been observed in the mirror industry, where the mid-spatial frequency surface roughness defect is commonly referred to as "woodgrain". Reducing striae, the composition variation, by methods such as described herein will reduce the level of compression and tension between the layers resulting in improved polishability.

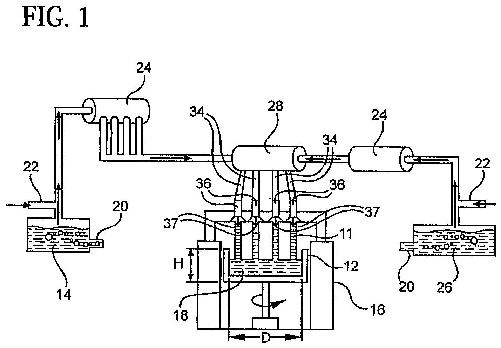

As a first step, a silica-titania glass boule is prepared according to any method known in the art; for example, by the method described in U.S. Patent No. 5,696,038 using the apparatus as described in Application Publication No. 2004/0027555, which apparatus is illustrated herein as Figure 1. The $\omega_1$, $\omega_2$ and $\omega_3$ values used in the manufacture of titania-containing silica boules described herein are 1.71018 rpm, 3.63418 rpm and 4.162 rpm, respectively. In accordance with the invention, after the boule was manufactured, striae were reduced by holding the silica-titania ULE glass boule at a temperature in excess of 1600 °C (as indicated by the furnace crown temperature) for a time in the range of 72-160 hours, preferably 72-96 hours (approximately 3-4 days). In one embodiment the temperature was in the range of 1600-1700 °C. In a further embodiment the temperature was approximately 1650 $\pm$ 25 °C. In another embodiment the glass was held at temperature in a manner such that the glass does not mix or move, although movement of the glass is not expected to diminish the striae reduction according to the invention. The motion restriction of the glass was accomplished by packing the material with refractory in such a way that the glass could not move in any direction. After packing to restrict movement, the glass was heated using standard $CH_4$-Oxy fired burners in the same furnaces used to make the silica-titania ULE boule. Glass surface temperature data was recorded during the heat treatments. After the temperature hold for a time as indicated above, the glass was force-cooled at a rate in the range of 25-75 °C per hour, for example at a rate of approximately 50 °C per hour, down to 1000 °C and then allowed to cool at furnace cooling rate to ambient temperature (the temperature of the room surrounding the furnace). The burners were arranged so that they covered all radii of the glass sample being heated and the gas flows to the burners were sufficient to achieve and maintain the temperatures specified herein.

After the boule having striae reduced by heat treating as described above has been cooled to ambient temperatures, the boule can be cut, cored or otherwise processed into shapes that are suitable for making optical elements.

Such processing, in addition to cutting or coring, may include etching, additional thermal treatments, grinding, polishing, applying selected metals to form a mirror, and such additional processing as may be necessary to form the desired optical element.

A general method for making silica-titania optical elements having reduced striae is to prepare a silica-titania glass boule in a furnace using any method known in the art; heat treat the boule at a temperature above 1600 °C, preferably at a temperature in the range of 1600-1700 °C, for a time in the range of 72-160 hours, preferably for a time in the range of 72-96 hours, to reduce the striae in said boule; cool the boule from the above 1600 °C range to 1000 °C at a rate in the range of 25-75 °C per hour, followed by cooling to ambient temperature at the natural cooling rate of the furnace to thereby yield a silica-titania glass boule having reduced striae; and process the glass as necessary into a reduced striae optical element. A particular embodiment for making silica-titania optical elements having reduced striae is to prepare a silica-titania consolidated glass boule in a rotating vessel in a furnace using any method known in the art; heat treats the boule, or a sample taken from a boule so prepared, at a temperature in the range of 1600-1700 °C for a time in the range of 72-96 hours to reduce the striae in said boule; cool the boule from the 1600-1700 °C range to 1000 °C at a rate of 50 °C per hour followed by cooling to ambient temperature at the natural cooling rate of the furnace to thereby yield a silica-titania glass boule having reduced striae; cut the boule into a shape of a selected optical element; and cut, grind and polish the shape into an optical element having reduced striae suitable for extreme ultraviolet lithography. The optical elements thus made are suitable for extreme ultraviolet lithography; for example, mirrors for use in reflective lithography methods.

Example 1

Referring to the apparatus described in Figure 1 herein, a titania-containing silica glass boule was manufactured using a high purity silicon-containing feedstock or precursor 14 and a high purity titanium-containing feedstock or precursor 26. The feedstock or precursor materials are typically siloxanes, alkoxides and tetrachlorides containing titanium or silicon. Siloxanes and alkoxides of silicon and titanium are preferred. One particular commonly used silicon-containing feedstock material is octamethylcyclotetrasiloxane, and one particular commonly used titanium-containing feedstock material is titanium isopropoxide, both of which were used herein. An inert bubbler gas 20 such as nitrogen was bubbled through feedstocks 14 and 26, to produce mixtures containing the feedstock vapors and carrier gas. An inert carrier gas 22 such as nitrogen was combined with the silicon feedstock vapor and bubbler gas mixture and with the titanium feedstock vapor and bubbler gas mixture to prevent saturation and to deliver the feedstock materials 14, 26 to a conversion site 10 within furnace 16 through distribution systems 24 and manifold 28. The silicon feedstock and vapor and the titanium feedstock and vapor were mixed in a manifold 28 to form a vaporous, titanium-containing silica glass precursor mixture which was delivered through conduits 34 to burners 36 mounted in the upper portion 38 of the furnace 16. The burners 36 produce burner flames 37. Conversion site burner flames 37 are formed with a fuel and oxygen mixture such as methane mixed with hydrogen and/or oxygen, which combusts, oxidizes and converts the feedstocks at temperatures greater than about 1600° C into soot 11. The burner flames 37 also provide heat to consolidate the soot 11 into glass. The temperature of the conduits 34 and the feedstocks contained in the conduits are typically controlled and monitored in minimize the possibility of reactions prior to the flames 37.

The feedstocks were delivered to a conversion site 10, where they were converted into titania-containing silica soot particles 11. The soot 11 was deposited in a revolving collection cup 12 located in a refractory furnace 16 typically made from zircon and onto the upper glass surface of a hot titania-silica glass body 18 inside the furnace 16. The values for $\omega_1$, $\omega_2$ and $\omega_3$ used in the manufacture of the titania-containing silica boules were 1.71018 rpm, 3.63418 rpm and 4.162 rpm, respectively. The soot particles 11 consolidate into a titania-containing high purity silica glass body.

The cup 12 typically has a circular diameter shape of between about 0.2 meters and 2 meters so that the glass body 18 is a cylindrical body having a diameter D between about 0.2 and 2 meters and a height H between about 2 cm and 20 cm. The weight percent of titania in the fused silica glass can be adjusted by changing the amount of either the titanium feedstock or silicon-containing feedstock delivered to the conversion site 10 that is incorporated into the soot 11 and the glass 18. The amount of titania and/or silica is adjusted so that the glass body has a coefficient of thermal expansion of about zero at the operating temperature of an EUV or soft x-ray reflective lithography or mirror element.

The powders are collected in the cup and consolidated into a glass boule. Typically, temperatures above 1600 °C are sufficient to consolidate the powder into a glass boule; for example, a temperature in the range 1645-1655 °C. After the silica-titania glass boule of the desired size was formed, the glass boule was removed from the furnace for further processing in accordance with the present invention. When the boule is removed from the furnace, either the entire boule can be returned to the furnace for processing according to the invention or a segment of the boule can be cored. The cores are taken through the depth of the boule and were heat treated according to the invention to reduce striae. In yet another embodiment the boule is heat treated by maintaining the temperature of the boule in the range of 1600-1700 °C for a time in the range of 72-96 hours.

In the present example multiple 25.4 cm (10 inch) diameter silica-titania cores were taken of approximately the entire thickness of the boule. For heat-treating according to the invention, a silica-titania glass core was placed in a zircon (zirconium silicate) cup or vessel, and the core was surrounded on its edge and bottom with crushed zircon to restrict movement of the glass. The core and cup were then placed in a rotating furnace and heated to a temperature a temperature in the range of 1600-1700 °C for a time in the range of 72-96 hours. The glass sample was heated using $CH_4$-Oxy burners and glass surface temperatures were recorded during the heat treatment. After the glass was held at temperature for the indicated time range, the glass was cooled in the furnace at a rate of approximately 50 °C/hour down to a temperature of approximately 1000 °C, and then to ambient temperature at the natural cooling rate of the furnace. After final cooling the samples were annealed at a temperature below 1000 °C for a time in the range of 70 to 130 hours and, after cooling after annealing, CTE (coefficient of thermal expansion) measurements were recorded in 0.635 cm ( one-quarter inch) increments using PEO equipment. The data indicate that the bulk CTE value is unaffected by heat treatment according to the invention, and in fact was reduced by the heat treatment according to the invention.

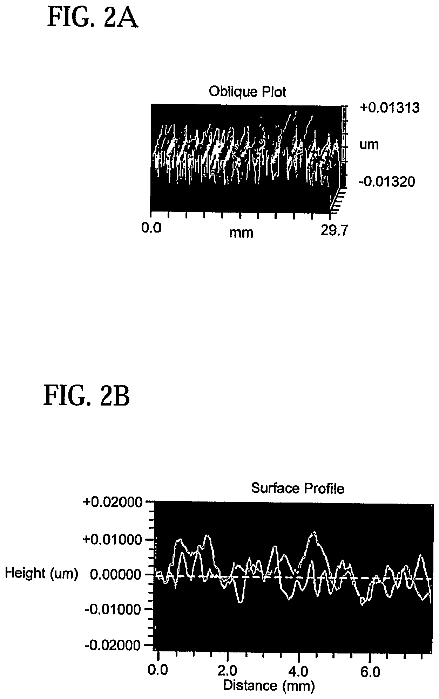

Figure 2A and 2B are inteferometric scans. Figure 2A is an inteferometric scan depicting the impact of striae on mid-spatial frequency roughness. Due to the waviness of striae throughout the boule, it is not possible to extract a part with striae that are perfectly parallel with the boule' surface. Consequently, some striae always "break" the surface. Figure 2B is an inteferometric scan across striae and shows the peak-to-valley changes in the surface. Striae improvements were determined by analysis of improvements in *optical retardation.*

The division of light into two components (an "ordinary" ray $n_o$ and an extraordinary ray $n_e$) is found in materials which have two different indices of refraction in different orthogonal directions such that when light entering certain transparent material, it splits into two beams which travel at different speeds through the material (a faster path and a slower path). Birefringence is defined by the equation $\Delta n = n_e - n_o$, where $n_o$ and $n_e$ are the refractive indices for polarizations perpendicular and parallel to the axis of anisotropy, respectively. Consequently, when the beam exits the material there is a difference between when the faster and the slower beam exit. This difference is the *optical retardation,* commonly measure in nanometers. Optical retardation is scaled by the thickness of the material through which the light passes. If one sample of a material is twice as thick as a second sample of the same material, the sample that is twice as thick will exhibit twice the optical retardation of the other sample. Because optical retardation scales with thickness it is often normalized by dividing by the sample thickness (in centimeters). This normalized optical retardation is known as *birefringence.* The difference between birefringence and retardation is that birefringence is normalized. If all samples happened to be 1 cm thick, then the birefringence would be equal to the retardation, but with different units.

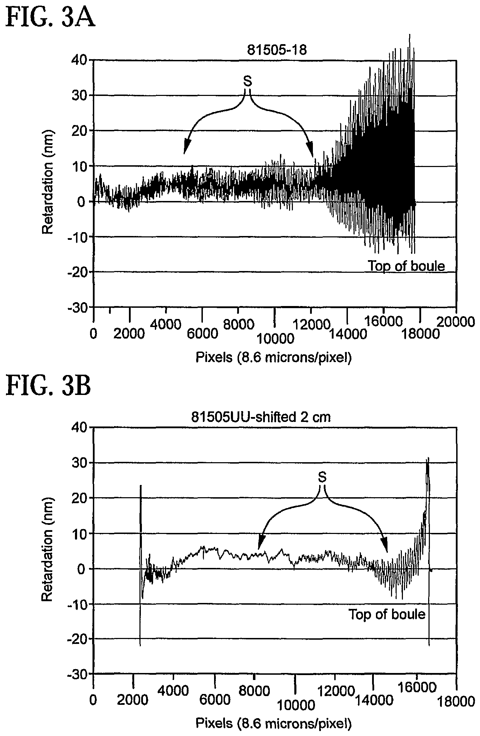

Figures 3A and 3B together illustrate the changes in optical retardation due to striae reduction as a result of heat treatment according to the invention. Figure 3A illustrates the *before heat treatment* magnitude of optical retardation due to striae ("S") on the y-axis versus the position of the boule (x-axis). Figure 3B illustrates the *after heat treatment* magnitude of optical retardation of the striae S on the y-axis versus the position of the boule (x-axis). In Figure 3B the elevated optical retardation levels at either end of the graph are not striae, but are a result of sample preparation. A comparison of Figures 3A and 3B clearly indicates that there is less optical retardation in the Figure 3B sample, and this gives a clear indication of striae reduction using the heat treatment according to the invention.

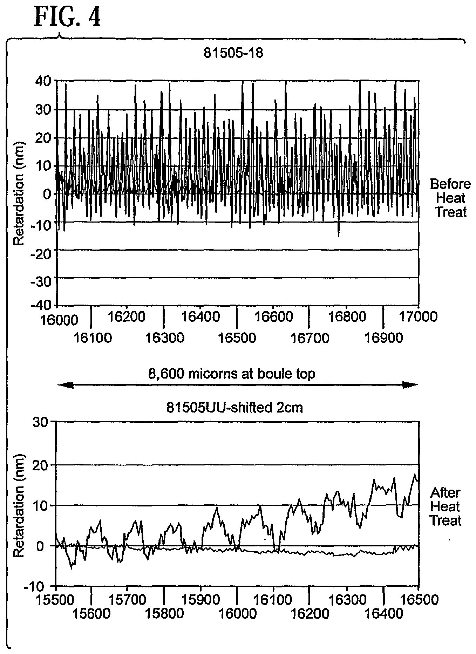

Figure 4 is another illustration of striae reduction from small sections near the top of a ULE glass boule. This data, and that shown in Figures 3A and 3B, indicate that heat treatment according to the invention can reduce the magnitude of striae in a boule by more then 500%. It is also noted that when the invention is practiced most of the "higher frequencies" of striae are eliminated.

Figure 5 illustrates CTE (coefficient of thermal expansion) changes versus height in the boule before and after heat treatment according to the invention. The data indicate that the bulk CTE value is unaffected by heat treatment according to the invention.

Example 2

A glass boule is prepared according to Example 1, except that during the preparation of the boule the values for $\omega_1$, $\omega_2$ and $\omega_3$ used in the manufacture of the silica-titania boule were each greater than 5 rpm as taught by U.S. 2004/0027555, and the values for $\omega_1$, $\omega_2$ and $\omega_3$ during heat treatment are 1.71018 rpm, 3.63418 rpm and 4.162 rpm, respectively. The resulting boule is heat treated at a temperature above 1600 °C for a selected time to reduce the striae in the boule. Preferably the boule is heated at a temperature in the range of 1600-1700 for a time in the range 72-96 hours. In additional embodiments of this method the values for $\omega_1$, $\omega_2$ and $\omega_3$ used in the manufacture of the silica-titania boule were each greater than 5 rpm during the heat treatment of the boule according to the present invention to reduce striae.

When practicing striae reduction according to the invention, the cost effective way to reduce striae in a glass boule will be to hold the entire boule at the temperatures and for the times described herein. This can be done at the end of the boule forming process before the boule is removed from the furnace. Using the method of the invention will result in significant striae reduction in all regions of the boule and especially in the top half of the boule. The resulting material can then be polished using methods known in the art to yield optical elements meeting the stringent requirement for optical elements that will be use in ULE applications.

Having set forth the details of the invention, one can clearly see that by using the method of the invention it is possible to reduce striae in an ultra-low expansion glass. The glass can be prepared in any shape by any method known in the art, and after preparation of the glass it is heat treated in a furnace at a temperature greater than 1600 °C for a time in the range of 72-288 hours and cooled the glass to ambient temperature to yield a silica-titania glass having reduced striae. The most common shape for preparing the glass is a boule that is round and has a thickness, though other shapes are possible.

Example 3

In another aspect, the disclosure is directed to a low expansion glass product having significantly reduced striae and a method for making the product. In particular, the invention results in a low expansion glass product with significantly reduced striae that can be made into optical elements that have extremely low levels of mid-spatial frequency surface roughness. This is achieved by controlling specific aspects of the boule motion in the furnace to yield a low expansion glass. In the discussion that follows Corning ULE® low expansion glass is used as the exemplary glass. However, the method described can be used to manufacture any low expansion glass.

Heat treatment, as described above, of a low expansion glass such as ULE has been shown to significantly reduce cyclic compositional variations which occur during the deposition process. In addition, it has been shown that the extent of striae reduction is directly related to the time and temperature of heat treatment and inversely related to the striae spacing. Striae spacing can be adjusted by controlling the period of boule motion, oscillation and rotation, during laydown. Boule motions consisting of short periods of oscillation yield shorter striae spacing (that is, thinner striae) than motions with long periods of oscillation. Striae with shorter spacing are shown herein to diminish more easily during heat treatment, both during the time of boule formation and during and any additional post-formation heat treatment.

Reducing striae will reduce some of the polishing issues, which have been observed with ULE material. Specifically, mid-spatial frequency surface roughness will be improved which may yield material more suitable for EUV applications and other applications where extremely smooth surface finish is required. Striae (or composition layering) in ULE is very evident in the direction parallel with the top and bottom of the boules. The striae consists of variations in $TiO_2$ composition of generally more than +/ 0.1% compared to the local average $TiO_2$ level which is generally in the 7.25 to 8.25% range depending on nominal CTE target. Variations in composition (striae) result in alternating thin layers of CTE and therefore alternating planes of compression and tension (between the layers). When attempting to polish "standard ULE" material, the alternating compression and tension layers caused by striae can yield unequal material removal and unacceptable surface roughness. This effect has been observed in the mirrors industry, where the mid-spatial frequency surface roughness defect is commonly referred to as "wood grain."

In the manufacturing of ULE boules, the furnace substrate (and the boule) is oscillated and rotated to achieve uniform radial composition and CTE as described in U.S. Patent No. 5,970,751 A. The equations of motion, *where rotation is in rpm,* used to make ULE low expansion glass, as also given above, are:

$$\text{x-axis} = x(t) = r_1 \sin 2\pi\omega_1 t + r_2 \sin 2\pi\omega_2 t \qquad \text{Eq. 1}$$

$$\text{y-axis} = y(t) = r_1 \cos 2\pi\omega_1 t + r_2 \cos 2\pi\omega_2 t \qquad \text{Eq. 2}$$

$$\text{Rotation} = \omega_3 t \qquad \text{Eq. 3}$$

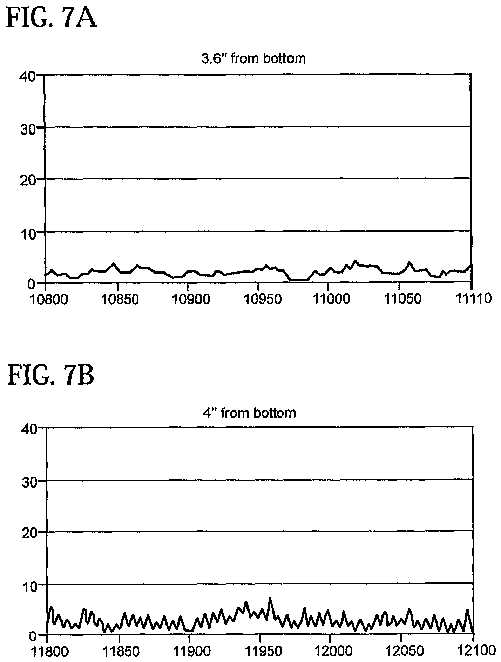

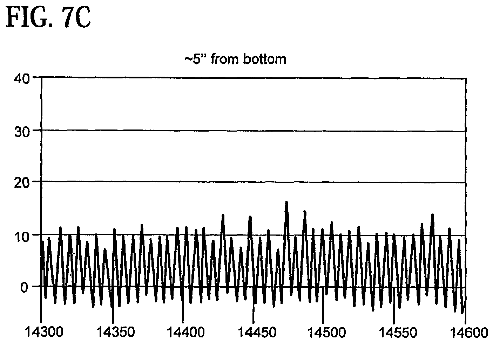

Eq. 1 and 2 describe the oscillation and Eq. 3 describes the rotation of the entire boule. $r_1$, $r_2$, $\omega_1$, $\omega_2$, and $\omega_3$ are variables that can be manipulated in motion models and the furnace to change the nature of the furnace motion and resulting striae. We have determined that choosing values for these variables that minimize the time it takes for the x, y, and r positions to repeat will minimize the magnitude and distance between striae layers in the ULE forming process, resulting in a ULE glass product that has reduced levels of striae in both the number and thickness. Furthermore, minimizing the distance between striae allows the "heat treatment process" as described above to easily diminish the striae further with relatively short process or treatment time. In fact, it has been found that oscillation motions as described herein below have yielded a product with striae spacing so close that the striae "self treats" as the boule is forming, yielding extremely low levels of striae for the majority of the boule. In other words, the time it takes to form the boule is sufficient to allow the compositional gradients to "diffuse" such that all glass made, except for glass made during the last 1-2 days of the production run, has extremely low levels of striae as shown in Figures 7A-7C for a boule 6 inches (~15 cm) thick. As one proceeds from the top of the boule to the bottom, Figure 7A → 7C, the striae level decreases. *The boule illustrated in Figures 7A-7C was made according to the Invention claimed herein, but without the additional heat treatment described above.* The time it took for the boule to be prepared enabled striae at the bottom of the boule to "self-heal) because they experienced the longest exposure to the furnace temperature. Addition heat treating as taught above will further diminish striae..

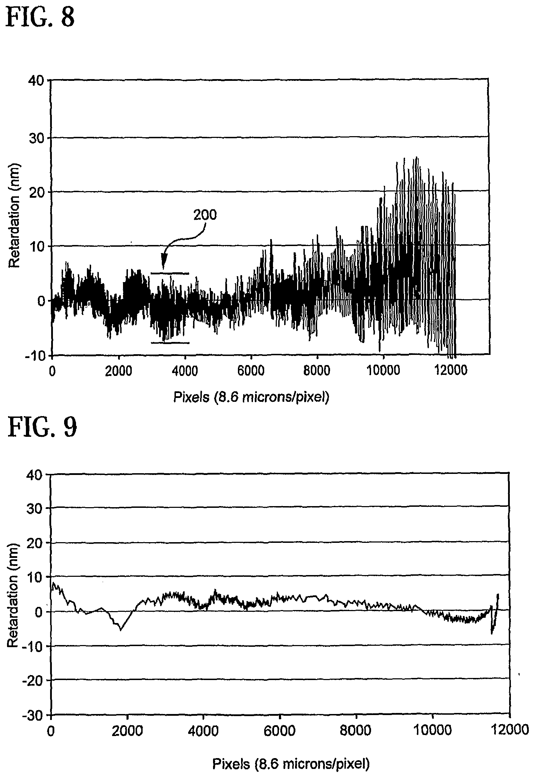

Figure 8 illustrates a "standard" or prior art low expansion glass boule made according to U.S. Patent No. 5,970,751 A. This boule was made without the additional heat treatment described above. Striae magnitude is directly related to the width of the striae band (illustrated by numeral 200) in the plot at any elevation and not the actual value depicted in Figure 8 at any one point.

Figure 9 illustrates a boule of low expansion glass (ULE glass) made according to the present invention wherein the time it takes for the oscillation motions to repeat themselves (the oscillation motion repeats) is less than ten (10) minutes. In a further embodiment the time between oscillation motion repeats is less than five (5) minutes. In yet another embodiment the time between oscillation motion repeats is two and one-half minutes or less (2.5 minutes or less). In addition, after preparation of the glass using the oscillation patterns as described, the glass it is heat treated in a furnace at a temperature greater than 1600 °C for a time in the range of 48-288 hours, cooled to 1000 °C at a rate in the range of 25-75 °C per hour (for example, approximately 50 °C), and then cooled the glass to ambient temperature to yield a silica-titania glass having reduced striae. In a further embodiment the heat treating is done at a temperature on the range of 1600-1700 °C for a time in the range of 48-160 hours followed by cooling as described in this Paragraph. In yet another embodiment the time for heat treating at a temperature on the range of 1600-1700 °C is for a time in the range of 48-96 hours followed by cooling as described in this Paragraph. After final cooling the samples can, optionally, be annealed at a temperature below 1000 °C for a time in the range of 70 to 130 hours.

Using the method wherein the oscillation period is less than 10 minutes, one can prepare an low expansion glass in which the point-to-point variation in titania content is 0.1 wt% or less as one proceeds through the majority of thickness of the boule from the bottom to the top, Consequently, the invention is further directed to low expansion glass and low expansion optical elements having a titania variation of 0.1 wt.% or less throughout the glass or element, such glass or element having a CTE of $0 \pm 3$ ppb/°C over the temperature range of 25-35 °C. The glass is a silica-titania glass comprising 5-10 wt. titania and 90-95 wt. silica. In one embodiment the titania content is in the range 7-8.5 wt.% and the CTE is CTE of $0 \pm 3$ ppb/°C over the temperature range of 5-35 °C. In a further embodiment, the invention is directed to a low expansion glass and low expansion optical elements, such glass or element having a titania variation of 0.1 wt.% or less throughout the glass or element, such glass or element having a CTE of $0 \pm 3$ ppb/°C over the temperature range of 5-35 °C. In further embodiment the titania variation is 0.05 wt.% or less throughout the glass or element.

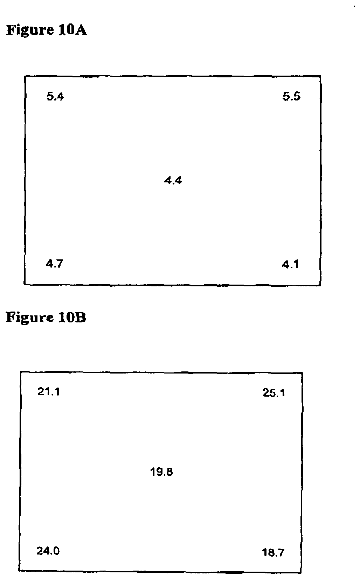

Figures 10A and 10B illustrate the peak-to-valley roughness, measured by interferometry, of a finished optical element using the silica-titania glass made according to the method of the present invention and comparative earlier silica-titania glass, respectively. Figures 10A and 10B represent the roughness values obtained at five points of a polished optical element of any shape. Using the silica-titania glass material of the invention as described herein and using industry accepted polishing methods known in the art (for example, deterministic polishing methods or methods as described in commonly-owned copending U.S. Application No. 11/699,287 filed January 29, 2007 [describing high flow rate polishing methods using a slurry flow of greater than 1.0 ml/cm$^2$/min] whose teaching are incorporated herein by reference), one can obtain a finished optical element have a peak-to-valley roughness of less than 10 nm as shown in Figure 10A; typically of approximately 5 nm or less. The average roughness of the five measured points in Figure 10A is 4.8 nm. Figure 10B represents comparative optical elements made using earlier silica-titania glass having a CTE in the range of 20-30 ppb/°C (see U.S. Patent No. 7.053,017 and copending U.S. Application No. 11/445071, filed May 31, 2006) polished using the same method as that used for Figure 10A. This glass has a peak-to-valley roughness, measured by interferometry, in the approximate range of 18-25 nm; the average of the five measured points being approximately 21 nm. [It should be noted there is a background roughness due to noise in the measurement system and to the fact that one cannot polish a surface to be atomistically flat. That is, there is no "absolute" flatness. This background roughness is approximately 4 nm peak-to-valley as measured on polished high purity fused silica (HPFS®, Corning Incorporated) which is typically used as the standard.] Accordingly, using the silica-titania glass described herein and polishing methods known in the art, in one embodiment one can make an optical element suitable for extreme ultraviolet lithography, the element being made of a titania-containing silica glass having a titania content in the range of 5-10 wt.%, a polished and shaped surface, and average variation in titania content of less than $\pm$ 0.1 wt. % as measured through the vertical thickness of the glass and a coefficient of thermal expansion of $0 \pm 3$ ppb/°C throughout the temperature range 5-35 °C and an peak-to-valley roughness of 10 nm or less; and in another embodiment a peak-to-valley roughness of approximately 5 nm or less. In still another embodiment the average variation in titania content is less than $\pm$ 0.05 wt. % as measured through the vertical thickness of the glass and the peak-to-valley roughness of 10 nm or less; and in yet another embodiment a peak-to-valley roughness of approximately 5 nm or less.

While the invention has been described with respect to a limited number of embodiments, those skilled in the art, having benefit of this disclosure, will appreciate that other embodiments can be devised which do not depart from the scope of the invention as disclosed herein. For example, herein is describes heat treating a glass boule that has a diameter and a thickness, or glass cores taken from a boule, a glass of any shape having a thickness can be treated according to the invention, For example, the glass can be rectangular, square, octagonal, hexagonal, oblate, and so forth. Accordingly, the scope of the invention should be limited only by the attached claims.

**Claims**

1. A method for making silica-titania glass optical blanks and/or elements having reduced striae, said method comprising:

   preparing a consolidated silica-titania glass boule having a titania content in the range of 5-10 wt.% according to any method known in the art that utilizes both an oscillation pattern and a rotational pattern during said preparation;
   after consolidation, heat treating the glass in a furnace at a temperature greater than 1600 °C for a time in the range of 48-288 hours;
   cooling the glass to ambient temperature to yield a silica-titania glass having reduced striae; and
   processing the glass as necessary into a silica-titania glass optical blank and/or element having reduced striae suitable for extreme ultraviolet lithography;
   wherein the oscillation pattern repeats itself in 10 minutes or less.

2. The method according to claim 1, wherein said rotational and oscillation patterns for the boule are defined by the equations

$$\text{x-axis} = r_1 \sin 2\pi (\omega_1 t) + r_2 \sin 2\pi (\omega_2 t) \qquad \text{Eq. 1}$$

$$\text{y-axis} = r_1 \cos 2\pi (\omega_1 t) + r_2 \cos 2\pi (\omega_2 t) \qquad \text{Eq. 2}$$

$$\text{Rotation} = \omega_3 t \qquad \text{Eq. 3, }$$

   and the values for $\omega_1$, $\omega_2$ and $\omega_3$ used are such that an oscillation pattern repeats itself in 5 minutes or less and the rotational pattern repeats itself in 5 minutes or less.

3. The method according to claim 2 wherein said oscillation repeats itself in a time of 2.5 minutes or less.

4. The method according to claim, wherein the rotational pattern repeats itself in a time in the range of 2.5-10 minutes.

5. The method according to claim 1, wherein the silica-titania glass boule is prepared by flame hydrolysis using silica and titania precursors selected from the group consisting of siloxanes and alkoxides and tetrachlorides of silicon and titanium.

6. The method according to claim 1, wherein the consolidated boule is heat treated at a temperature in the range of 1600-1700 °C for a time in the range of 48-160 hours, followed by cooling at a rate of approximately 50 °C to a temperature of 1000 °C and then cooled to ambient temperature at the furnace's natural cooling rate.

7. The method according to claim 1, wherein after preparation of said boule, said method further comprises heat treating the glass boule in a furnace at a temperature greater than 1600 °C for a time in the range of 48-288 hours to further reduce striae in said boule.

8. The method according to claim 7, wherein the temperature is in the range 1600-1700 °C and the time is in the range of 48-160 hours.

9. The method according to claim 7, wherein after heat treating the glass, the glass is cooled at a rate in the range of 20-75 °C to a temperature of 1000 °C and then cooled to ambient temperature at the furnace's natural cooling rate.

**Patentansprüche**

1.  Verfahren zum Produzieren von optischen Siliciumoxid-Titanoxid-Glasrohlingen und/oder -elementen mit reduzierten Schlieren, wobei das Verfahren Folgendes beinhaltet:

    Herstellen einer verfestigten Siliciumoxid-Titanoxid-Glasboule mit einem Titanoxidgehalt im Bereich von 5-10 Gew.-% gemäß einem auf dem Gebiet bekannten Verfahren, das während der Herstellung sowohl ein Schwingungsmuster als auch ein Rotationsmuster verwendet;
    nach der Verfestigung, Wärmebehandeln des Glases in einem Ofen bei einer Temperatur von über 1600 °C für eine Zeit im Bereich von 48-288 Stunden;
    Abkühlen des Glases auf die Umgebungstemperatur, um ein Siliciumoxid-Titanoxid-Glas mit reduzierten Schlieren zu ergeben; und
    Verarbeiten des Glases nach Bedarf zu einem optischen Siliciumoxid-Titanoxid-Glasrohling und/oder -element mit reduzierten Schlieren, die für extreme Ultraviolett-Lithographie geeignet sind;
    wobei sich das Schwingungsmuster in 10 Minuten oder weniger wiederholt.

2.  Verfahren gemäß Anspruch 1, wobei das Rotations- und Schwingungsmuster für die Boule definiert sind durch die Gleichungen

$$\text{X-Achse} = r_1 \sin 2\pi\,(\omega_1 t) + r_2 \sin 2\pi\,(\omega_2 t) \qquad \text{Gl. 1}$$

$$\text{Y-Achse} = r_1 \cos 2\pi\,(\omega_1 t) + r_2 \cos 2\pi\,(\omega_2 t) \qquad \text{Gl. 2}$$

$$\text{Rotation} = \omega_3 t \qquad \text{Gl. 3,}$$

    und die verwendeten Werte für $\omega_1$, $\omega_2$ und $\omega_3$ derart sind, dass sich ein Schwingungsmuster in 5 Minuten oder weniger wiederholt und sich das Rotationsmuster in 5 Minuten oder weniger wiederholt.

3.  Verfahren gemäß Anspruch 2, wobei sich das Schwingungsmuster in einer Zeit von 2,5 Minuten oder weniger wiederholt.

4.  Verfahren gemäß Anspruch 2 , wobei sich das Rotationsmuster in einer Zeit im Bereich von 2,5-10 Minuten wiederholt.

5.  Verfahren gemäß Anspruch 1, wobei die Siliciumoxid-Titanoxid-Glasboule durch Flammhydrolyse unter Verwendung von Siliciumoxid-Titanoxid-Vorläufern hergestellt wird, die aus der Gruppe, bestehend aus Siloxanen und Alkoxiden und Tetrachloriden des Siliciums und Titans, ausgewählt sind.

6.  Verfahren gemäß Anspruch 1, wobei die verfestigte Boule bei einer Temperatur im Bereich von 1600-1700 °C für eine Zeit im Bereich von 48-160 Stunden wärmebehandelt wird, gefolgt vom Abkühlen mit einer Rate von ungefähr 50 °C auf eine Temperatur von 1000 °C, und dann mit der natürlichen Abkühlrate des Ofens auf die Umgebungstemperatur abgekühlt wird.

7.  Verfahren gemäß Anspruch 1, wobei nach der Herstellung der Glasboule das Verfahren ferner ein Wärmebehandeln des Glases in einem Ofen bei einer Temperatur von über 1600 °C für eine Zeit im Bereich von 48-288 Stunden beinhaltet, um die Schlieren in der Boule weiter zu reduzieren.

8.  Verfahren gemäß Anspruch 7, wobei die Temperatur im Bereich von 1600-1700 °C liegt und die Zeit im Bereich von 48-160 Stunden liegt.

9.  Verfahren gemäß Anspruch 7, wobei nach dem Wärmebehandeln des Glases das Glas mit einer Rate im Bereich von 20-75 °C auf eine Temperatur von 1000 °C abgekühlt und dann mit der natürlichen Abkühlrate des Ofens auf die Umgebungstemperatur abgekühlt wird.

**Revendications**

1. Méthode de réalisation d'ébauches et/ou d'éléments optiques en verre au silice-titane aux stries réduites, ladite méthode comprenant :

   la préparation d'une boule de verre au silice-titane présentant une teneur en titane dans la plage de 5 à 10% en poids, selon une méthode connue dans la technique, utilisant à la fois un motif oscillatoire et un motif rotatoire au cours de ladite préparation ;
   après la consolidation, le traitement thermique du verre dans un four à une température supérieure à 1 600°C pendant une période comprise dans la plage allant de 48 à 288 heures ;
   le refroidissement du verre à la température ambiante pour obtenir un verre au silice-titane aux stries réduites ; et
   le traitement du verre, selon les exigences, en une ébauche et/ou un élément optique en verre au silice-titane présentant des stries réduites appropriées pour la lithographie à l'ultraviolet extrême ;
   la configuration oscillatoire se répétant toutes les 10 minutes ou moins.

2. Méthode selon la revendication 1, lesdites motifs rotatoire et oscillatoire pour la boule étant définis par les équations

$$x\text{-axis} = r_1\sin 2\pi\,(\omega_1 t) + r_2\sin 2\pi\,(\omega_2 t) \qquad \text{Éq. 1}$$

$$y\text{-axis} = r_1\cos 2\pi\,(\omega_1 t) + r_2\cos 2\pi\,(\omega_2 t) \qquad \text{Éq. 2}$$

$$\text{Rotation} = \omega_3 t \qquad \text{Éq. 3,}$$

et les valeurs utilisées pour $\omega_1$, $\omega_2$ et $\omega_3$ étant telles qu'un motif oscillatoire se répète en 5 minutes ou moins, et le motif rotatoire se répète en 5 minutes ou moins.

3. Méthode selon la revendication 2, ladite oscillation se répétant toutes les 2,5 minutes ou moins.

4. Méthode selon la revendication 2, le motif rotatoire se répétant à une échéance comprise dans la plage allant de 2,5 à 10 minutes.

5. Méthode selon la revendication 1, la boule de verre au silice-titane étant préparée par hydrolyse à la flamme en utilisant des précurseurs de silice et de titane sélectionnés dans le groupe composé de siloxanes et d'alcoxydes et de tétrachlorures de silicium et de titane.

6. Méthode selon la revendication 1, la boule consolidée subissant un traitement thermique à une température comprise dans la plage 1600-1700 °C pendant une période comprise dans la plage allant de 48 à 160 heures, suivie d'un refroidissement à un niveau d'environ 50°C jusqu'à une température de 1 000 °C, puis refroidie jusqu'à la température ambiante à la vitesse de refroidissement naturelle du four.

7. Méthode selon la revendication 1, dans laquelle, après la préparation de ladite boule, ladite méthode comprenant en outre le traitement thermique de la boule de verre dans un four à une température supérieure à 1 600°C pendant une période comprise dans la plage allant de 48 à 288 heures, pour réduire davantage les stries dans ladite boule.

8. Méthode selon la revendication 7, la température étant comprise dans la plage de 1 600 à 1 700 °C et la période dans la plage allant de 48 à 160 heures

9. Méthode selon la revendication 7, dans laquelle, après le traitement thermique du verre, le verre est refroidi à un niveau compris dans la plage de 20 à 75 °C jusqu'à la température de 1000 °C, puis refroidi jusqu'à la température ambiante à la vitesse de refroidissement naturelle du four.

# FIG. 1

## FIG. 2A

Oblique Plot

+0.01313

um

-0.01320

0.0          mm          29.7

## FIG. 2B

Surface Profile

+0.02000

+0.01000

Height (um)  0.00000

-0.01000

-0.02000

0.0     2.0     4.0     6.0

Distance (mm)

FIG. 3A

81505-18

FIG. 3B

81505UU-shifted 2 cm

# FIG. 4

FIG. 5

FIG. 6

## FIG. 7A

3.6" from bottom

## FIG. 7B

4" from bottom

## FIG. 7C

~5" from bottom

## FIG. 8

## FIG. 9

**Figure 10A**

| | |
|---|---|
| 5.4 | 5.5 |
| 4.4 | |
| 4.7 | 4.1 |

**Figure 10B**

| | |
|---|---|
| 21.1 | 25.1 |
| 19.8 | |
| 24.0 | 18.7 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005032622 A
- WO 2005114328 A
- US 5970751 A
- US 5696038 A
- US 20040027555 A
- US 5970591 A
- US 69928707 A
- US 7053017 B
- US 44507106 A